# EUROPEAN PATENT SPECIFICATION

(11) **EP 2 783 609 B1**
(45) Date of publication and mention of the grant of the patent: **27.04.2016**
(21) Application number: 13797283.2
(22) Date of filing: 10.01.2013
(51) Int. Cl.: A47J 31/46, A47J 31/48, A47J 31/44, A47J 31/58

(54) **PRESSURE RELIEF VALVE**
DRUCKENTLASTUNGSVENTIL
SOUPAPE DE SURPRESSION

(30) Priority: 30.05.2012 CN 201210172090
(43) Date of publication of application: 01.10.2014
(73) Proprietor: Ningbo Quanjing Electric Technology Co. Ltd., Zhejiang 315324 (CN)
(72) Inventor: JING, Yudong, Cixi Zhejiang 315324 (CN); YOU, Jun, Cixi Zhejiang 315324 (CN)
(74) Representative: Orr, Robert
(86) International application number: PCT/CN2013/000018
(87) International publication number: WO 2013/177936

(56) References cited:
- WO-A1-2006/033049
- CN-A- 102 835 900
- CN-U- 201 719 074
- CN-U- 202 775 903
- CN-Y- 201 119 773
- DE-U1- 29 618 224
- JP-A- H0 690 860
- JP-A- 2008 168 911
- US-A- 4 457 330
- US-A- 5 176 658
- US-A1- 2004 069 804

## Description

### Field of the Invention

The present invention relates to a relief valve particularly suitable for coffee makers.

### Description of the Prior Art

As a beverage extraction device, a coffee maker comprises two frames which may slide relatively to each other. The two frames form a relatively closed brewing chamber after being brought together. During brewing, a coffee bag is put into the brewing chamber; water is supplied by a water pump to a heating device for heating; the hot water flows through the coffee bag inside the brewing chamber to extract and brew the powder in the coffee bag; and finally the extracted beverage flows out from an outlet of the brewing chamber for use.

As there is great pressure inside the brewing chamber during the extraction, the high pressure inside the brewing chamber has to be released promptly after the brewing of coffee is completed. At present, relief valves, used in coffee makers to release the pressure of the whole brewing system after the brewing of coffee is completed, are solenoid valves. It is well known that solenoid valves are expensive. As a result, the overall cost of the coffee makers is increased, and the competitive advantages in the market are lost. Although there are mechanical relief valve structures in the market, they are not suitable for coffee makers. Furthermore, all the existing mechanical relief valves are provided with springs and the springs become rusty easily, so the coffee may be contaminated.

US Patent No. US-5176658 discloses a check valve assembly for use in medical devices. The assembly has a single valve disc therein to allow a medical fluid to be drawn from a bulk container through an inlet opening and secondary opening of the valve assembly and into a syringe, and then subsequently dispensing the fluid from the syringe through the secondary opening and outlet opening of the valve assembly and into a second container or to the patient. The valve assembly can be used with a squeeze bulb of an aspiration device such that as the bulb is squeezed, the air in the bulb passes from the secondary opening to the outlet opening of the valve assembly. Then, as the bulb is released, negative pressure from the bulb is transmitted through the secondary opening and inlet opening of the valve assembly to the aspiration device, to draw fluids from the patient and into the aspiration device.

### Summary of the Invention

The technical problem to be solved by the present invention is to provide a novel mechanical relief valve configuration in response to the state of the prior art described above. The relief valve in the present invention has the same pressure relief effect as the solenoid valves but at low cost.

The present invention solves this technical problem by providing a relief valve as claimed in claim 1. The relief valve comprises a valve seat, the valve seat is formed with a cavity therein, a water outlet passage and a pressure relief passage are provided on the bottom of the valve seat, both of which communicate with the cavity, the centre of a bottom surface of the cavity is provided with an upward protrusion, and the pressure relief passage runs through the upward protrusion; the valve body is fixed inside the cavity, a sealing ring is disposed between the peripheral surface of the valve body and the inner wall of the cavity for sealing the relief valve; a water inlet passage communicating with the cavity is provided on the top of the valve body, the bottom of the valve body is formed with a recess, a plurality of apertures are provided in an inner peripheral wall of the recess each communicating with the outer peripheral surface of the valve body, a downward protrusion is provided at the centre of the recess, the water inlet passage runs through the downward protrusion; a sealing plate, made of flexible material, is disposed inside the cavity and positioned under the valve body, a gap is formed between the peripheral surface of the sealing plate and the inner peripheral wall of the cavity, a plurality of elastic portions protruding downward is provided on the bottom surface of the sealing plate, the bottom of each elastic portion is supported on the bottom surface of the cavity to ensure that the sealing plate is always separated from the inlet of the water outlet passage; in a normal situation, the elastic portions separate the bottom surface of the sealing plate from the inlet of the pressure relief passage; when water flows through the water inlet passage, under the water pressure, the centre of the sealing plate is forced to deform and sink to block the inlet of the pressure relief passage.

A projection protruding downward is formed in the centre of the bottom surface of the sealing plate, and when the centre of the sealing plate deforms and sinks, the projection blocks the inlet of the pressure relief passage. The arrangement of the projection can better ensure that the sealing plate blocks the inlet of the pressure relief passage when the centre of the sealing plate deforms and sinks.

In order to enable the elastic portions to support the sealing plate more stably, without losing good elastic force, the elastic portions are arranged at intervals along the circumference.

Preferably, in order to enable the elastic portions to support the sealing plate more stably, there are ten elastic portions, five of which are of a cylindrical shape, the other five of which are of a cuboid shape oriented respectively along the radial direction, moreover, the cylindrical elastic portions and the cuboid elastic portions are arranged at intervals from each other. The cylindrical elastic portions have the advantage of good elasticity while the cuboid elastic portions have the advantage of good support.

The valve body is fixed inside the cavity through a positioning inserting block, the positioning inserting block has a plurality of latches which extend forward and are horizontally arranged at intervals, a plurality of inserting holes are provided in the valve body for receiving the latches, the latches are inserted through an outer wall at one side of the cavity, pass through the inserting holes and finally emerge out of the outer wall on the other side of the cavity.

Compared with the prior art, the present invention has the following advantages: during normal operation, hot water flows into the water inlet passage, and under the water pressure, the centre of the sealing plate is forced to deform and sink to block the inlet of the pressure relief passage, so that the water flow can only pass in turn through the apertures in the inner peripheral wall of the recess under the valve body and the gap formed between the peripheral surface of the sealing plate and the inner peripheral wall of the cavity, and is then drained from the water outlet passage of the valve seat; during the pressure relief, no hot water flows into the water inlet passage, the sealing plate will return to its original position under the action of the elastic portions and the inlet of the pressure relief passage is opened, so that extra water and pressure inside the brewing system and the pipeline is drained via the pressure relief passage, thus achieving pressure relief; furthermore, this valve configuration not only may realize the pressure relief and split-flow functionality of the solenoid valves, but also has a cost far below that of the solenoid valves; in addition, the function of blocking or unblocking the inlet of the pressure relief passage is achieved through the deformability of the sealing plate, so no spring is needed, thus keeping the beverage free of contamination by rusty springs.

### Brief Description of the Drawings

Fig. 1 is a first perspective structural schematic diagram of an embodiment of the present invention;
Fig. 2 is a second perspective structural schematic diagram of an embodiment of the present invention;
Fig. 3 is a sectional perspective view of an embodiment of the present invention;
Fig. 4 is an exploded perspective view of an embodiment of the present invention;
Fig. 5 is a perspective structural schematic diagram of a valve body in an embodiment of the present invention;
Fig. 6 is a perspective structural schematic diagram of a valve seat in an embodiment of the present invention;
Fig. 7 is a perspective structural schematic diagram of a sealing plate in an embodiment of the present invention.

### Particular embodiment

The present invention is described in further detail below with reference to the embodiment in the accompanying drawings.

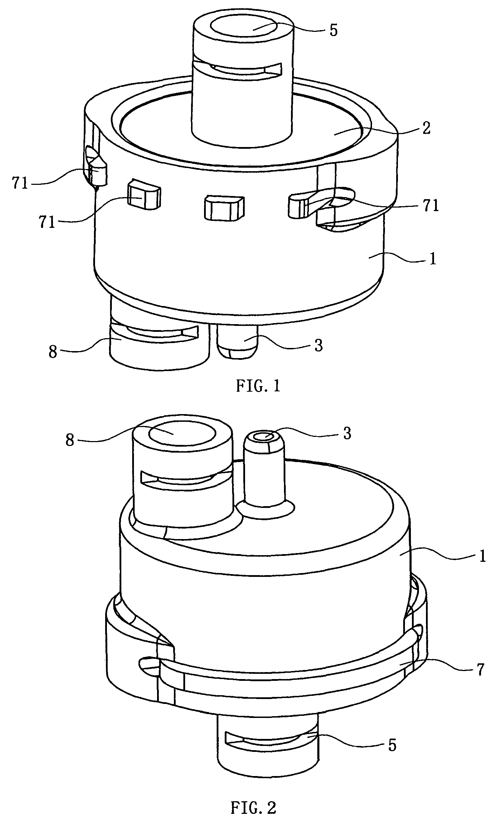

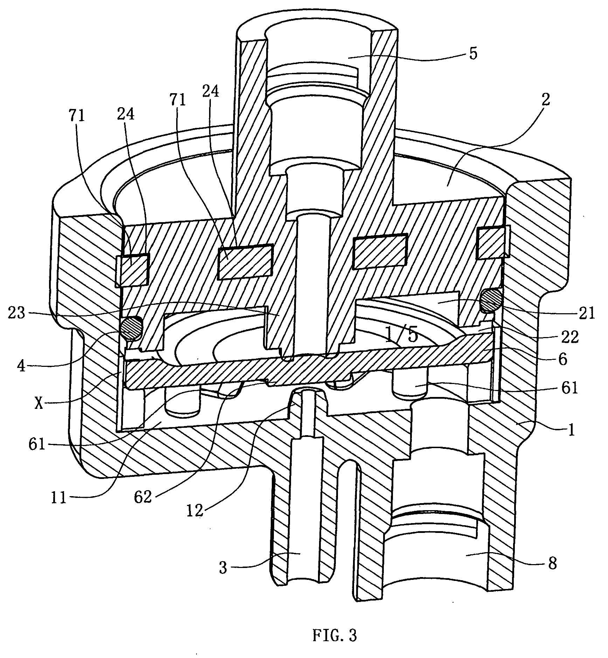

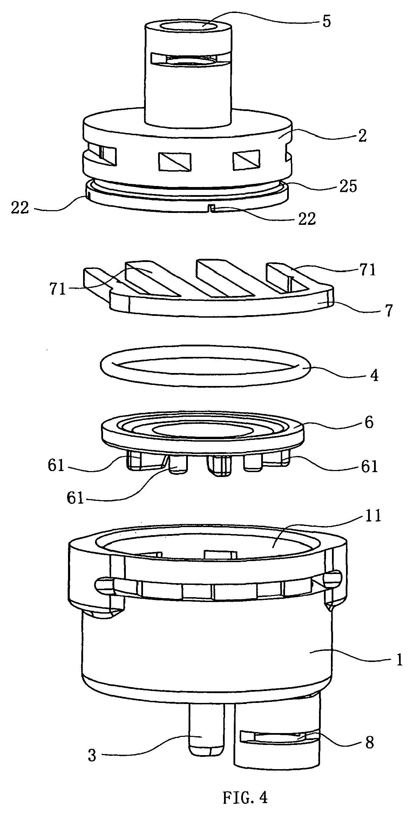

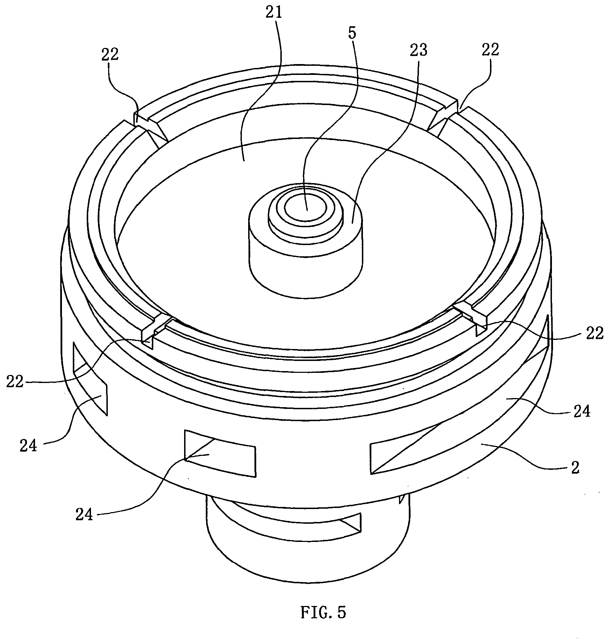

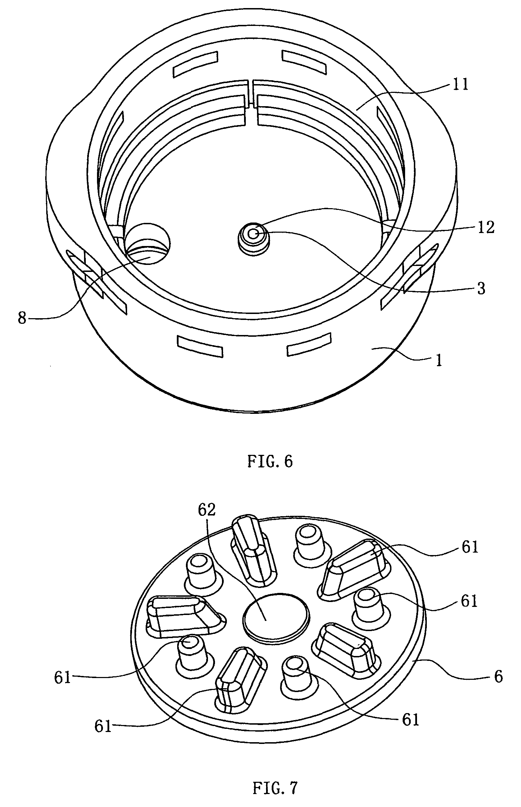

As shown in Fig. 1 to Fig. 7, a preferred embodiment of the present invention is shown.

A relief valve comprises:
a valve seat 1, the valve seat 1 is formed with a cavity 11 therein, the cavity 11 has a circular cross section, a water outlet passage 8 and a pressure relief passage 3 are provided on the bottom of the valve seat 1, both of which communicate with the cavity, 11, the centre of a bottom surface of the cavity 11 is provided with an upward protrusion 12, and the pressure relief passage 3 runs through the upward protrusion 12;
a valve body 2 is fixed inside the cavity 11 through a positioning inserting block 7, the positioning inserting block 7 has a plurality of latches 71 which extend forward and are horizontally arranged at intervals, a plurality of inserting holes 24 are provided in the valve body 2 for receiving the latches 71, the latches 71 are inserted through an outer wall at one side of the cavity 11, pass through the inserting holes 24 and finally emerge out of the outer wall on the other side of the cavity 11; a sealing ring 4 is disposed between the peripheral surface of the valve body 2 and the inner wall of the cavity 11 for sealing the relief valve, the sealing ring 4 is disposed in an annular groove 25 in the peripheral wall of the valve body 2; a water inlet passage 5 communicating with the cavity 11 is provided on the top of the valve body 2, the bottom of the valve body 2 is formed with a recess 21, a plurality of apertures 22 are provided in an inner peripheral wall of the recess 21 each communicating with the outer peripheral surface of the valve body, a downward protrusion 23 is provided at the centre of the recess 21, the water inlet passage 5 runs through the downward protrusion 23;
a sealing plate 6, made of flexible material and disc-shaped, is disposed inside the cavity 11 and positioned under the valve body 2, a gap X is formed between a peripheral surface of the sealing plate 6 and the inner peripheral wall of the cavity 11, a plurality of elastic portions 61 protruding downward is provided on the bottom surface of the sealing plate 6, the bottom of each elastic portion 61 is supported on the bottom surface of the cavity 11, a projection 62 protruding downward is formed in the centre of the bottom surface of the sealing plate 6; there are ten elastic portions 61 arranged at intervals along the circumference and distributed around the projection, five of which are of a cylindrical shape, the other five of which are of a cuboid shape and oriented respectively along the radial direction, moreover, the cylindrical elastic portions 61 and the cuboid elastic portions 61 are arranged at intervals from each other; the elastic portions 61 ensure that the sealing plate 6 is always separated from the inlet of the water outlet passage 8; in a normal situation, the elastic portions 61 separate the bottom surface of the sealing plate 6 from the inlet of the pressure relief passage 3; when water flows through the water inlet passage 5, under the water pressure, the centre of the sealing plate 6 is forced to deform and sink to block the inlet of the pressure relief passage 3 with the projection 62.

The following will describe the working principle of the relief valve by taking the application of the relief valve in a coffee maker as an example.

The water inlet passage 5 is connected to the water outlet of a heating boiler of the coffee maker, the water outlet passage 8 is connected to the extraction chamber of the coffee maker via a one-way valve configuration, and the pressure relief passage 3 is connected to the water tank or a garbage box of the coffee maker.

During the normal operation of brewing coffee, the hot water heated by the heating boiler flows into the water inlet passage 5, and under the water pressure, the centre of the sealing plate 6 is forced to deform and sink so that the projection 62 blocks the inlet of the pressure relief passage 3, so that the hot water can only pass in turn through the apertures 22 in the inner peripheral wall of the recess 21 under the valve body 2 and the gap X formed between the peripheral surface of the sealing plate 6 and the inner peripheral wall of the cavity 11, and is then drained from the water outlet passage 8 of the valve seat 1. The hot water drained pushes open the one-way valve under the water outlet passage 8, and then enters the coffee bag in the extraction chamber to extract coffee. Thus, the brewing of coffee is completed.

After stopping brewing coffee, it is necessary to release pressure. The supply of hot water to the water inlet passage 5 is stopped. Under the action of the elastic portions 61 of the sealing plate 6, the centre of the sealing plate 6 deforms upward to its original position, and then the inlet of the pressure relief passage 3 is opened. The extra water and pressure in both the brewing system and the pipeline flow in turn through the apertures 22 in the inner peripheral wall of the recess 21 under the valve body and the gap X formed between the peripheral surface of the sealing plate 6 and the inner peripheral wall of the cavity 11, and are then drained into the water tank or the garbage box through the pressure relief passage 3, thus achieving pressure relief.

## Claims

1. A relief valve comprising:
a valve seat (1), the valve seat (1) is formed with a cavity (11) therein, a water outlet passage (8) and a pressure relief passage (3) are provided on the bottom of the valve seat (1), both of which communicate with the cavity (11), the centre of a bottom surface of the cavity (11) is provided with an upward protrusion (12), and the pressure relief passage (3) runs through the upward protrusion (12);
the valve body (2) is fixed inside the cavity (11), a sealing ring (4) is disposed between the peripheral surface of the valve body (2) and the inner wall of the cavity (11) for sealing the relief valve; a water inlet passage (5) communicating with the cavity (11) is provided on the top of the valve body (2), the bottom of the valve body (2) is formed with a recess (21); and
a sealing plate (6), made of flexible material, is disposed inside the cavity (11) and positioned under the valve body (2), a gap (X) is formed between the peripheral surface of the sealing plate (6) and the inner peripheral wall of the cavity (11);
**characterized in that**:
a plurality of apertures (22) are provided in an inner peripheral wall of the recess (21) each communicating with the outer peripheral surface of the valve body, a downward protrusion (23) is provided at the centre of the recess (21), the water inlet passage (5) runs through the downward protrusion (23); and
a plurality of elastic portions (61) protruding downward is provided on the bottom surface of the sealing plate (6), the bottom of each elastic portion (61) is supported on the bottom surface of the cavity (11) to ensure that the sealing plate (6) is always separated from the inlet of the water outlet passage (8); in a normal situation, the elastic portions (61) separate the bottom surface of the sealing plate (6) from the inlet of the pressure relief passage (3); when water flows through the water inlet passage (5), under the water pressure, the centre of the sealing plate (6) is forced to deform and sink to block the inlet of the pressure relief passage (3).

2. The relief valve according to claim 1, **characterized in that** a projection (62) protruding downward is formed in the centre of the bottom surface of the sealing plate (6), and when the centre of the sealing plate (6) deforms and sinks, the projection (62) blocks the inlet of the pressure relief passage (3).

3. The relief valve according to claim 1, **characterized in that** the elastic portions (61) are arranged at intervals along the circumference.

4. The relief valve according to claim 3, **characterized in that** there are ten elastic portions (61), five of which are of a cylindrical shape, the other five of which are of a cuboid shape oriented respectively along the radial direction, moreover, the cylindrical elastic portions (61) and the cuboid elastic portions (61) are arranged at intervals from each other.

5. The relief valve according to claim 1, **characterized in that** the valve body (2) is fixed inside the cavity (11) through a positioning inserting block (7), the positioning inserting block (7) has a plurality of latches (71) which extend forward and are horizontally arranged at intervals, a plurality of inserting holes (24) are provided in the valve body (2) for receiving the latches (71), the latches (71) are inserted through an outer wall at one side of the cavity (11), pass through the inserting holes (24) and finally emerge out of the outer wall on the other side of the cavity (11).

## Patentansprüche

1. Entlastungsventil, umfassend:
einen Ventilsitz (1), wobei der Ventilsitz (1) mit einem darin vorgesehenen Hohlraum (11) ausgebildet ist, wobei ein Wasseraustrittskanal (8) und ein Druckentlastungskanal (3) an der Unterseite des Ventilsitzes (1) vorgesehen sind, wobei beide mit dem Hohlraum (11) in Verbindung stehen, wobei der Mittelpunkt einer Bodenfläche des Hohlraums (11) mit einem nach oben weisenden Vorsprung (12) versehen ist, und der Druckentlastungskanal (3) durch den nach oben weisenden Vorsprung (12) verläuft;
wobei der Ventilkörper (2) in dem Hohlraum (11) befestigt ist, wobei ein Dichtungsring (4) zwischen der Randfläche des Ventilkörpers (2) und der inneren Wand des Hohlraums (11) zum Abdichten des Entlastungsventils angeordnet ist; wobei ein Wassereinlasskanal (5), welcher mit dem Hohlraum (11) in Verbindung steht, auf der Oberseite des Ventilkörpers (2) vorgesehen ist, wobei die Unterseite des Ventilkörpers (2) mit einem Rücksprung (21) ausgebildet ist; und
wobei eine Dichtungsplatte (6), hergestellt aus einem flexiblen Material, in dem Hohlraum (11) angeordnet und unter dem Ventilkörper (2) positioniert ist, wobei ein Spalt (X) zwischen der Randfläche der Dichtungsplatte (6) und der Innenwand des Hohlraums (11) gebildet wird;
**dadurch gekennzeichnet,**
**dass** eine Mehrzahl von Durchbrechungen (22) in einer Innenwand des Rücksprungs (21) vorgesehen sind, wobei jede mit der Außenfläche des Ventilkörpers verbunden ist, wobei ein nach unten weisender Vorsprung (23) in dem Mittelpunkt des Rücksprungs (21) vorgesehen ist, wobei der Wassereinlasskanal (5) durch den nach unten weisenden Vorsprung (23) verläuft; und
eine Mehrzahl von nach unten vorstehenden elastischen Abschnitten (61) an der Bodenfläche der Dichtungsplatte (6) vorgesehen ist, wobei die Unterseite jedes elastischen Abschnitts (61) auf der Bodenfläche des Hohlraums (11) abgestützt ist, um zu gewährleisten, dass die Dichtungsplatte (6) immer von dem Einlass des Wasseraustrittskanals (8) getrennt ist; wobei die elastischen Abschnitte (61) in einer Normalsituation die Bodenfläche der Dichtungsplatte (6) von dem Einlass des Druckentlastungskanals (3) abtrennen; wobei, wenn Wasser durch den Wassereintrittskanal (5) fließt, der Mittelpunkt der Dichtungsplatte (6) unter dem Wasserdruck gezwungen ist sich zu deformieren und abzusinken, um den Einlass des Druckentlastungskanals (3) zu blockieren.

2. Entlastungsventil nach Anspruch 1, **dadurch gekennzeichnet, dass** ein nach unten vorstehender Vorsprung (62) im Zentrum der Bodenfläche der Dichtungsplatte (6) ausgebildet ist, und dass der Vorsprung (62) den Einlass des Druckentlastungskanals (3) blockiert, wenn der Mittelpunkt der Dichtungsplatte (6) sich deformiert und absinkt.

3. Entlastungsventil nach Anspruch 1, **dadurch gekennzeichnet, dass** die elastischen Abschnitte (61) in Intervallen entlang des Umfangs angeordnet sind.

4. Entlastungsventil nach Anspruch 3, **dadurch gekennzeichnet, dass** zehn elastische Abschnitte (61) vorgesehen sind, von denen fünf eine zylindrische Form aufweisen, die anderen fünf eine Würfelform aufweisen und entlang der radialen Richtung orientiert sind, weitergehend, dass die zylindrischen elastischen Abschnitte (61) und die würfelförmigen elastischen Abschnitte (61) in Intervallen beabstandet voneinander angeordnet sind.

5. Entlastungsventil nach Anspruch 1, **dadurch gekennzeichnet, dass** der Ventilkörper (2) mittels eines positionierenden Einführblocks (7) in dem Hohlraum (11) befestigt ist, wobei der positionierende Einführblock (7) eine Mehrzahl von Riegeln (71) aufweist, welche sich nach vorne erstrecken und horizontal in Intervallen angeordnet sind, wobei eine Mehrzahl von Einführlöchern (24) in dem Ventilkörper (2) vorgesehen sind, um die Riegel (71) aufzunehmen, wobei die Riegel (71) durch eine äußere Wand auf einer Seite des Hohlraums (11) eingeführt werden, durch die Einführlöcher (24) hindurchtreten und schließlich aus der äußeren Wand auf der anderen Seite des Hohlraums (11) heraustreten.

## Revendications

1. Soupape de décharge comprenant :
un siège de soupape (1), le siège de soupape (1) est formé avec une cavité (11) dedans, un passage de sortie d'eau (8) et un passage de détente de pression (3) sont prévus sur la partie inférieure du siège de soupape (1), les deux communiquent avec la cavité (11), le centre d'une surface inférieure de la cavité (11) est doté d'une protubérance vers le haut (12), et le passage de détente de pression (3) passe à travers la protubérance vers le haut (12) ;
le corps de soupape (2) est fixé à l'intérieur de la cavité (11), une bague d'étanchéité (4) est disposée entre la surface périphérique du corps de soupape (2) et la paroi interne de la cavité (11) pour assurer l'étanchéité de la soupape de décharge ; un passage d'entrée d'eau (5) communiquant avec la cavité (11) est prévu sur la partie supérieure du corps de soupape (2), la partie inférieure du corps de soupape (2) est formée avec un évidement (21) ; et
une plaque d'étanchéité (6), réalisée en un matériau souple, est disposée à l'intérieur de la cavité (11) et positionnée sous le corps de soupape (2), un espace (X) est formé entre la surface périphérique de la plaque d'étanchéité (6) et la paroi périphérique interne de la cavité (11) ;
**caractérisée en ce que** :
une pluralité d'ouvertures (22) sont prévues dans une paroi périphérique interne de l'évidement (21) dont chacune communique avec la surface périphérique externe du corps de soupape, une protubérance vers le bas (23) est prévue au centre de l'évidement (21), le passage d'entrée d'eau (5) passe à travers la protubérance vers le bas (23) ; et
une pluralité de parties élastiques (61) faisant saillie vers le bas est prévue sur la surface inférieure de la plaque d'étanchéité (6), la partie inférieure de chaque partie élastique (61) est supportée sur la surface inférieure de la cavité (11) afin de s'assurer que la plaque d'étanchéité (6) est toujours séparée de l'entrée du passage de sortie d'eau (8) ; dans une situation normale, les parties élastiques (61) séparent la surface inférieure de la plaque d'étanchéité (6) de l'entrée du passage de détente de pression (3); lorsque l'eau s'écoule à travers le passage d'entrée d'eau (5), sous la pression d'eau, le centre de la plaque d'étanchéité (6) est forcé de se déformer et de s'enfoncer pour bloquer l'entrée du passage de détente de pression (3).

2. Soupape de décharge selon la revendication 1, **caractérisée en ce qu'**une saillie (62) faisant saillie vers le bas est formée au centre de la surface inférieure de la plaque d'étanchéité (6) et, lorsque le centre de la plaque d'étanchéité (6) se déforme et s'enfonce, la saillie (62) bloque l'entrée du passage de détente de pression (3).

3. Soupape de décharge selon la revendication 1, **caractérisée en ce que** les parties élastiques (61) sont agencées de façon espacée les unes des autres le long de la circonférence.

4. Soupape de décharge selon la revendication 3, **caractérisée en ce qu'**il existe dix parties élastiques (61), dont cinq sont de forme cylindrique, et les autres cinq sont de forme parallélépipédique orientées respectivement le long de la direction radiale, de plus, les parties élastiques cylindriques (61) et les parties élastiques parallélépipédiques (61) sont agencées de façon espacée les unes des autres.

5. Soupape de décharge selon la revendication 1, **caractérisée en ce que** le corps de soupape (2) est fixé à l'intérieur de la cavité (11) à travers un bloc d'insertion de positionnement (7), le bloc d'insertion de positionnement (7) possède une pluralité de verrous (71) qui s'étendent vers l'avant et sont agencés horizontalement de façon espacée les unes des autres, une pluralité de trous d'insertion (24) sont prévus dans le corps de soupape (2) pour recevoir les verrous (71), les verrous (71) sont insérés à travers une paroi externe au niveau d'un côté de la cavité (11), traversent les trous d'insertion (24) et émergent finalement en dehors de la paroi externe sur l'autre côté de la cavité (11).
